(19) Europäisches Patentamt
European Patent Office
Office européen des brevets

(11) **EP 2 526 526 B1**

(12) **FASCICULE DE BREVET EUROPEEN**

(45) Date de publication et mention
de la délivrance du brevet:
**04.06.2014 Bulletin 2014/23**

(51) Int Cl.:
***G06T 7/00*** *(2006.01)*

(21) Numéro de dépôt: **11708895.5**

(22) Date de dépôt: **21.01.2011**

(86) Numéro de dépôt international:
**PCT/FR2011/000041**

(87) Numéro de publication internationale:
**WO 2011/089341 (28.07.2011 Gazette 2011/30)**

(54) **PROCÉDÉ DE SEGMENTATION D'IMAGE, PROGRAMME D'ORDINATEUR ET SYSTÈME INFORMATIQUE CORRESPONDANT**

VERFAHREN ZUR SEGMENTIERUNG VON BILDERN, COMPUTERPROGRAMM UND ZUGEHÖRIGES COMPUTERSYSTEM

METHOD FOR SEGMENTING IMAGES, COMPUTER PROGRAM, AND CORRESPONDING COMPUTER SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2010 FR 1050407**

(43) Date de publication de la demande:
**28.11.2012 Bulletin 2012/48**

(73) Titulaire: **Université Paris 13
93430 Villetaneuse (FR)**

(72) Inventeurs:
- **MALGOUYRES, François
  F-31000 Toulouse (FR)**
- **LERME, Nicolas
  F-95400 Villiers-le-Bel (FR)**
- **LETOCART, Lucas
  F-95880 Enghien-les-Bains (FR)**

(74) Mandataire: **Audic, Hervé et al
Cabinet Audic
37 rue d'Amsterdam
75008 Paris (FR)**

(56) Documents cités:
**US-A1- 2007 014 473**

- **TOBI VAUDREY ET AL: "Space -Time Multi -Resolution Banded Graph -Cut for Fast Segmentation", 10 juin 2008 (2008-06-10), PATTERN RECOGNITION, SPRINGER BERLIN HEIDELBERG, BERLIN, HEIDELBERG, PAGE(S) 203 - 213, XP019090365,**
- **KOLMOGOROV V ET AL: "What energy functions can be minimized via graph cuts?", IEEE TRANSACTIONS ON PATTERN ANALYSIS AND MACHINE INTELLIGENCE, IEEE SERVICE CENTER, LOS ALAMITOS, CA, US, vol. 26, no. 2, 1 février 2004 (2004-02-01), pages 147-159, XP011105986, cité dans la demande**
- **RASTOGI A ET AL: "Localized Hierarchical Graph Cuts", COMPUTER VISION, GRAPHICS&IMAGE PROCESSING, 2008. ICVGIP '08. SIXTH INDIAN CONFERENCE ON, IEEE, PISCATAWAY, NJ, USA, 16 décembre 2008 (2008-12-16), pages 163-170, XP031409444,**
- **ALI KEMAL SINOP ET AL: "Accurate Banded Graph Cut Segmentation of Thin Structures Using Laplacian Pyramids", 1 janvier 2006 (2006-01-01), MEDICAL IMAGE COMPUTING AND COMPUTER-ASSISTED INTERVENTION - MIC CAI 2006 LECTURE NOTES IN COMPUTER SCIENCE, SPRINGER, BERLIN, DE, PAGE(S) 896 - 903, XP019043557, le document en entier**
- **BOYKOV Y ET AL: "Graph cuts and efficient N-D image segmentation", INTERNATIONAL JOURNAL OF COMPUTER VISION, KLUWER ACADEMIC PUBLISHERS, NORWELL, US, vol. 70, no. 2, 1 novembre 2006 (2006-11-01), pages 109-131, XP002513244,**

EP 2 526 526 B1

• LOMBAERT H ET AL: "A Multilevel Banded Graph Cuts Method for Fast Image Segmentation", COMPUTER VISION, 2005. ICCV 2005. TENTH IEEE INTERNATIONAL CONFERENCE ON BEIJING, CHINA 17-20 OCT. 2005, PISCATAWAY, NJ, USA,IEEE, vol. 1, 17 octobre 2005 (2005-10-17), pages 259-265, XP010854797,

**Description**

La présente invention concerne un procédé de segmentation d'image, un programme d'ordinateur et un système informatique correspondants.

L'invention s'applique plus particulièrement dans le domaine de la vision par ordinateur (« Computer Vision » en anglais).

La terminologie suivante est utilisée dans la présente description, ainsi que dans les revendications.

Un « système informatique » est un système conçu pour exécuter des instructions de programme d'ordinateur et comportant pour cela au moins une unité de traitement centrale, appelée également processeur ou CPU (de l'anglais « Central Processing Unit »). Dans un ordre de complexité croissante, un système informatique selon l'invention peut être constitué d'un simple ordinateur comportant un ou plusieurs CPU, ou d'un ensemble plus complexe dans lequel plusieurs ordinateurs sont interconnectés via un réseau de transmission de données.

Une « mémoire d'ordinateur » signifie n'importe quel type de support sur lequel sont enregistrées des données pouvant être lues par un ordinateur. Ce terme recouvre en particulier les disquettes, les disques compacts ou les DVD. Ce terme recouvre également les systèmes regroupant à la fois la mémoire d'ordinateur proprement dite et les dispositifs de lecture et/ou d'écriture sur cette dernière, tels que la mémoire RAM, les disques durs ou les clés USB.

Un « programme d'ordinateur », ou plus simplement « programme », est un ensemble d'instructions destinées à être exécutées par un ou plusieurs processeurs d'un système informatique.

L'article de Y. Boykov et M-P. Jolly : « Interactive graph cuts for optimal boundary and région segmentation of objects in n-d images », ICCV01 : Proceedings of « Internation Conference on Computer Vision », pages 105-112, 2001, décrit un procédé de traitement d'image comportant :

- lire une image enregistrée dans une mémoire d'ordinateur, l'image comportant une pluralité de points, ayant chacun une position dans l'image,
- déterminer une solution au problème de flot maximum dans un graphe comportant, d'une part, comme sommets, une source, un puits et des points de l'image et, d'autre part, des arcs munis chacun d'une capacité de passage de flot positive ou nulle,

les arcs comprenant des arcs, appelés arcs sources, reliant la source à chacun des points, des arcs, appelés arcs puits, reliant le puits à chacun des points et des arcs, appelés arcs inter-points, reliant les points entre eux,
à chaque point étant assignée une capacité, appelée capacité traversante, représentant la combinaison des capacités de passage de flot de l'arc source et de l'arc puits le reliant respectivement à la source et au puits,

- assigner, en fonction de la solution déterminée, un label « objet » ou bien un label « arrière plan » à chacun d'au moins une partie des points de l'image,
- enregistrer l'image avec les labels assignés dans une mémoire d'ordinateur.

Dans ce document, l'image est en deux dimensions avec ses points régulièrement espacés selon les deux dimensions et répartis sur des lignes et des colonnes.

Par ailleurs, le label de certains points de l'image, appelés germes (« seeds » en anglais) est imposé par l'utilisateur ou bien déterminé par l'ordinateur.

Les sommets du graphe sont constitués de tous les points de l'image et les arcs du graphe relient chaque point avec ses voisins, selon le critère de voisinage dit « de type 0 ». Ce critère définit, en deux dimensions, les points voisins d'un point considéré comme les quatre points positionnés respectivement directement au dessus, directement en dessous, directement à gauche et directement à droite du point considéré.

Une capacité, appelée capacité inter-points, est assignée à chacun de ces arcs. La capacité inter-points est déterminée à partir des intensités des deux points voisins liés par l'arc.

En outre, une capacité traversante est assignée à chaque point de l'image. Cette capacité traversante est déterminée de manière différente selon que le point est un point germe ou un point de label inconnu. Dans ce dernier cas, la capacité traversante est déterminée à partir de l'intensité du point.

Le problème de flot maximum, connu en soi, consiste à déterminer le « flot » maximum pouvant s'écouler depuis une source (« source » en anglais) jusqu'à un puits (« sink » en anglais), tous deux reliés à chaque point du graphe, en respectant, dans le graphe, les capacités inter-points et, au travers du graphe, les capacités traversantes.

Plusieurs algorithmes sont disponibles pour résoudre ce problème, tel que celui présenté dans l'article Y. Boykov et V. Kolmogorov : « An experimental comparison of min-cut/max flow algorithms for energy minimization in vision », EMMCVPR01 Proceedings of the International Workshop on Energy Minimization Methods in Computer Vision and Pattern Recognition, pages 359-374, 2001.

On observe empiriquement que cet algorithme nécessite une quantité de mémoire d'ordinateur et un temps de calcul qui augmentent de façon linéaire en fonction du nombre de sommets et d'arcs dans le graphe.

Ainsi, les procédés connus de segmentation présentent le problème de nécessiter de grandes quantités de mémoire d'ordinateur et de temps de calcul d'ordinateur, dés que la taille de l'image, c'est-à-dire le nombre de ses points, augmente.

L'article de Tobi Vaudrey et al intitulé « Space-Time Multi-Resolution Banded Graph-Cut for Fast Segmentation », publié le 10 juin 2008, dans Pattern Recognition, Springer Berlin Heidelberg, Berlin, Heidelberg, aux pages 203 à 213, décrit un procédé de segmentation des images successives d'une séquence d'images, utilisant une augmentation locale de résolution.

La demande de brevet US publiée sous le numéro US 2007/014473 A décrit un procédé de segmentation d'image utilisant une forme a priori dans lequel un graphe est généré en utilisant uniquement les points de l'image à l'intérieur d'une bande étroite paragraphe autour du bord de la forme a priori.

L'article de Rastogi A et al intitulé « Localized Hierarchical Graph Cuts », publié le 16 décembre 2008 dans Computer Vision, Graphics & Image Processing, 2008, ICVGIP '08, Sixth Indian Conference On, IEEE, Piscataway, NJ, USA, aux pages 163 à 170, décrit un procédé de segmentation d'image dans lequel une région d'incertitude est déterminée dans l'image, dans lequel la région d'incertitude est couverte de carreaux se chevauchant qui sont par la suite eux-mêmes regroupés en ensembles ne se chevauchant pas, et dans lequel chaque ensemble est segmenté.

Ainsi, il peut ainsi être souhaité de prévoir un procédé de segmentation d'image qui permette de s'affranchir, au moins en partie, des problèmes et contraintes précités.

L'invention a donc pour objet un procédé de segmentation d'image selon la revendication 1.

En effet, il a été trouvé que, la plupart du temps, la résolution du problème de flot maximum sur tous les points de l'image donnait un flot non nul dans l'arc source ou dans l'arc puits pour chacun d'un petit nombre de points seulement. Il a en outre été trouvé qu'il était possible de déterminer tous ces points, ou au moins une grande partie de ces points, a priori (c'est-à-dire avant de résoudre le problème de flot maximum), à partir des capacités traversantes. Plus précisément, il a été trouvé qu'un point avait de bonnes chances d'avoir un flot non nul dans son arc source ou son arc puits si les points de l'image situés dans une fenêtre prédéterminée appliquée autour du point critique vérifiaient une condition prédéterminée sur leurs capacités traversantes. Ainsi, dans le meilleurs des cas, les points critiques trouvés correspondent exactement aux points qui auraient eu un flot non nul dans l'arc source ou dans l'arc puits avec une résolution du flot maximum sur tous les points de l'image. Bien sûr, il est possible, suivant la condition choisie, que les points critiques ne correspondent pas exactement à ces points : certains pourraient avoir un flot traversant nul en résolvant le problème du flot maximum sur tous les points de l'image, et, inversement, certains points qui auraient eu un flot traversant non nul en résolvant le problème du flot maximum sur tous les points de l'image peuvent ne pas être déterminés comme point critique.

Grâce à invention, le problème de flot maximum n'est résolu que sur certains points de l'image (les points critiques) qui ne représentent en général qu'une petite partie de l'ensemble des points de l'image. Ainsi, la quantité de mémoire d'ordinateur et le temps de calcul d'ordinateur nécessaires à la segmentation sont réduits.

En outre, il a été constaté que la résolution du problème de flot maximum sur les points critiques uniquement donne de très bons résultats de segmentation, proches de la solution qui aurait été obtenue en prenant en compte tous les points de l'image.

D'autres caractéristiques du procédé sont énoncées dans les revendications 2 à 8.

L'invention a également pour objet un programme d'ordinateur selon la revendication.

L'invention a également pour objet un système informatique selon la revendication 1.

En particulier, le système informatique de l'invention pourrait être une machine d'imagerie médicale, telle qu'une machine à imagerie par résonance (ou IRM), un scanner, etc.

L'invention sera mieux comprise à l'aide de la description qui va suivre, donnée uniquement à titre d'exemple et faite en se référant aux dessins annexés dans lesquels :

- la figure 1 représente un exemple de système informatique selon l'invention,
- la figure 2 représente les étapes d'un procédé de segmentation d'image mis en oeuvre par le système informatique de la figure 1,
- la figure 3 représente un exemple de déroulement d'une partie du procédé de la figure 2.
- la figure 4 représente les étapes d'une variante du procédé de segmentation de la figure 2, et
- la figure 5 représente un exemple de déroulement d'une partie du procédé de la figure 4.

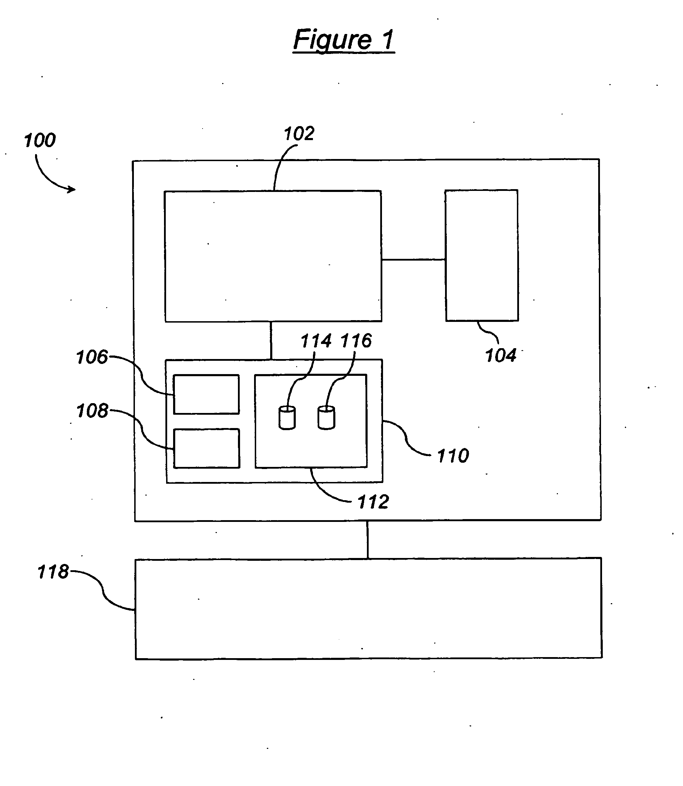

En référence à la figure 1, un exemple de système informatique selon l'invention est présenté, sous la forme d'un ordinateur 100.

L'ordinateur 100 comporte tout d'abord un CPU 102 et de la mémoire RAM 104 aptes à exécuter des programmes d'ordinateur, pour, en particulier, contrôler les autres éléments de l'ordinateur 100.

Parmi ces autres éléments, l'ordinateur 100 comporte tout d'abord un dispositif de lecture 106 d'une mémoire d'ordinateur et un dispositif d'écriture 108 dans une mémoire d'ordinateur. Par exemple, ces deux dispositifs 106, 108 correspondent à un disque dur de l'ordinateur ou bien, respectivement, à un lecteur de disques compacts ou de DVD et à un disque dur. Dans la suite de la description, on considérera le cas d'un disque dur, référencé 110, de sorte que les deux dispositifs 106, 108 accèdent à la même mémoire d'ordinateur, référencée 112. Une image 114 est enregistrée dans la mémoire d'ordinateur 112 du disque dur 110. Cette image provient par exemple d'une machine d'imagerie médicale, telle qu'une machine d'imagerie par résonance magnétique nucléaire (ou IRM), un scanner, etc.

L'ordinateur 100 comporte en outre une mémoire d'ordinateur dans laquelle est enregistré un programme d'ordinateur 116. Dans la suite de la description, on considèrera que le programme 116 est enregistré dans la mémoire d'ordinateur 112 du disque dur 110.

L'ordinateur 100 comporte en outre une interface homme/machine 118, telle que l'ensemble d'un écran, d'un clavier et/ou d'une souris.

L'image 114 comporte une pluralité de points, comprenant chacun une position dans l'image et une intensité. L'intensité peut comporter une seule valeur, représentant par exemple, un niveau de gris, ou bien plusieurs valeurs, représentant par exemple une couleur, par exemple exprimée sous la forme RGB (de l'anglais : « Red, Green, Blue ») ou les valeurs de plusieurs canaux dans le cas d'une image multicanaux. Dans la suite de la description, on considère le cas d'une image carrée de dimension deux, dans laquelle les points sont régulièrement espacés selon les deux dimensions, et organisés en lignes et colonnes. L'ensemble des points est noté $P$.

Le programme 116 comprend des instructions de programme d'ordinateur pour, lorsque ce programme 116 est exécuté par le système informatique 100, mettre en oeuvre le procédé de segmentation d'image qui va être décrit à présent.

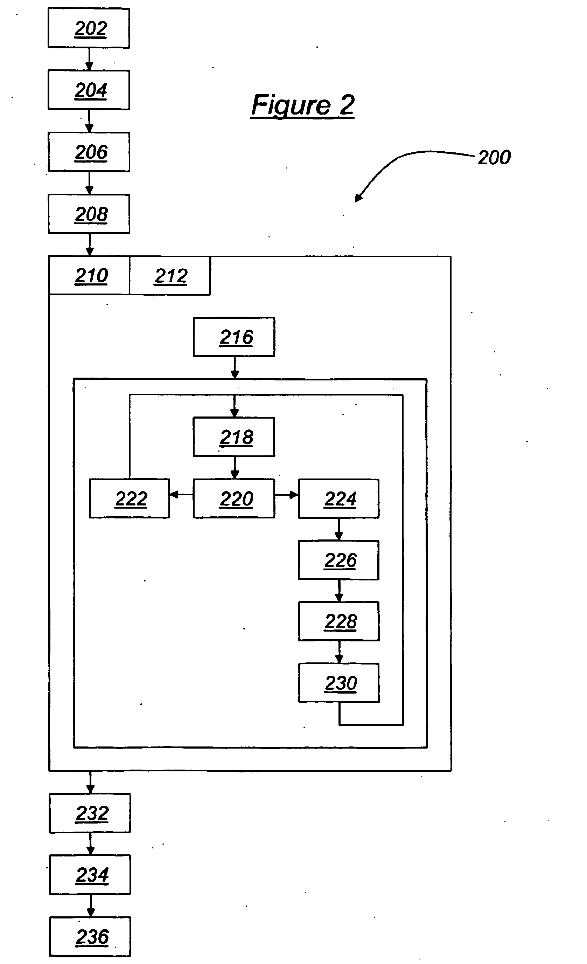

En référence à la figure 2, le procédé de segmentation d'image 200 comporte les étapes suivantes.

Suite par exemple à un lancement du programme 116 par un utilisateur, au cours d'une étape 202, l'ordinateur 100 lit, au moyen du dispositif de lecture 106, l'image 114 enregistrée dans la mémoire d'ordinateur 112 du disque dur 110.

Au cours d'une étape 204, l'ordinateur 100 assigne un label « objet » ou « arrière plan » à certains points, appelés « points germes ». Ces labels sont par exemple indiqués par l'utilisateur via l'interface homme/machine 118, ou bien déterminés par l'ordinateur 100 au moyen d'une méthode ad-hoc permettant de générer les points germes automatiquement.

Au cours d'une étape 206, l'ordinateur 100 détermine une capacité, appelée capacité traversante, pour chaque point de l'image. La capacité traversante d'un point $p \in P$ est notée $c(p)$. Pour les points qui ne sont pas des points germes, cette capacité traversante est par exemple déterminée à partir de la seule intensité du point, sans utiliser l'intensité d'autres points.

Au cours d'une étape 208, l'ordinateur 100 assigne, à chaque point $p \in P$, sa capacité traversante $c(p)$.

Au cours d'une étape 210, l'ordinateur 100 détermine des points de l'image, appelés points critiques.

Un point de l'image est un point critique lorsque au moins un nombre prédéterminé de points de l'image situés dans une fenêtre prédéterminée appliquée autour de ce point vérifient une condition prédéterminée sur leurs capacités traversantes.

Les points de l'image situés dans la fenêtre prédéterminée appliquée autour d'un point $p \in P$ sont appelés points fenêtrés de ce point p et sont notés Z($p$). On remarquera que le point p autour duquel la fenêtre est appliquée, est lui-même un point fenêtré.

Le fait de ne pas considérer tous les points fenêtrés peut être intéressant par exemple lorsque l'on souhaite écarter des points fenêtrés ceux dont l'intensité est déterminée comme aberrante. De préférence cependant, un point de l'image est un point critique lorsque tous les points de l'image situés dans une fenêtre prédéterminée appliquée autour de ce point vérifient la condition prédéterminée sur leurs capacités traversantes. C'est ce dernier cas qui sera considéré dans la suite de la description.

De préférence, la condition est que, parmi les points fenêtrés du point :

- au moins deux points fenêtrés présentent des capacités traversantes de signes contraires,
- au moins un point fenêtré présente une capacité traversante positive inférieure à un seuil positif prédéterminé, appelé seuil de capacité positif, ou bien
- au moins un point fenêtré présente une capacité traversante négative supérieure à un seuil négatif prédéterminé, appelé seuil de capacité négatif.

Ainsi, dit autrement, un point de l'image n'est pas un point critique lorsque tous les points fenêtrés de ce point :

- ont leurs capacités traversantes chacune supérieure au seuil de capacité positif prédéterminé, ou bien
- ont leurs capacités traversantes chacune inférieure au seuil de capacité négatif prédéterminé.

De préférence, la fenêtre est de taille fixe. De préférence également, la fenêtre est centrée sur le point auquel elle est appliquée. De préférence également, la fenêtre est rectangulaire, par exemple carrée. Dans la suite de la description, la fenêtre est prise de taille fixe, centrée et carrée.

Par ailleurs, de préférence, les seuils de capacité sont égaux en valeur absolue. De préférence, les seuils de capacité sont constants, c'est-à-dire indépendants de la position du point dans la fenêtre, ainsi que du point auquel la fenêtre est appliquée. Dans la suite de la description, les seuils de capacité sont pris égaux en valeur absolue et constants. Ils sont noté respectivement $\delta$ et $-\delta$ ($\delta$ étant strictement positif).

Ainsi, un point de l'image est un point critique lorsqu'il ne vérifie pas la condition, notée (C), suivante :

$$\begin{cases} c(q) \geq \delta, \forall q \in Z(p) \\ ou \\ c(q) \leq -\delta, \forall q \in Z(p) \end{cases}$$

De préférence, tous les points de l'image vérifiant la condition prédéterminée sont déterminés à l'étape 210. L'ensemble des points critiques est noté par la suite $P_c$

Au cours d'une étape 212, J'ordinateur 100 détermine, pour chaque point critique $p \in P_c$, ses points voisins, notés $N(p)$, selon un critère de voisinage prédéterminé sur leurs positions relatives dans l'image 114. Dans l'exemple décrit, le critère de voisinage est le critère de voisinage dit de type 0. Ce critère définit, en deux dimensions, les points voisins d'un point considéré comme les quatre points positionnés respectivement directement au dessus, directement en dessous, directement à gauche et directement à droite du point considéré. De manière générale, pour une image de dimension $d$ , le critère de voisinage de type 0 est le suivant :

$$N(p) = \left\{ q \in P : \sum_{i=1}^{d} |q_i - p_i| = 1 \right\}, \forall p \in P.$$

Au cours d'une étape 212, l'ordinateur 100 assigne, à chaque paire de points critiques voisins, une capacité, appelée capacité inter-points. La capacité inter-points de deux points critiques voisins $p \in P_c$ et $q \in P_c$ est notée $c(p, q)$. Cette capacité inter-points est par exemple déterminée à partir des seules intensités des deux points, sans utiliser l'intensité d'autres points.

Par exemple, les étapes 210 et 212 sont mises en oeuvre en même temps par les étapes 216 à 222 suivantes.

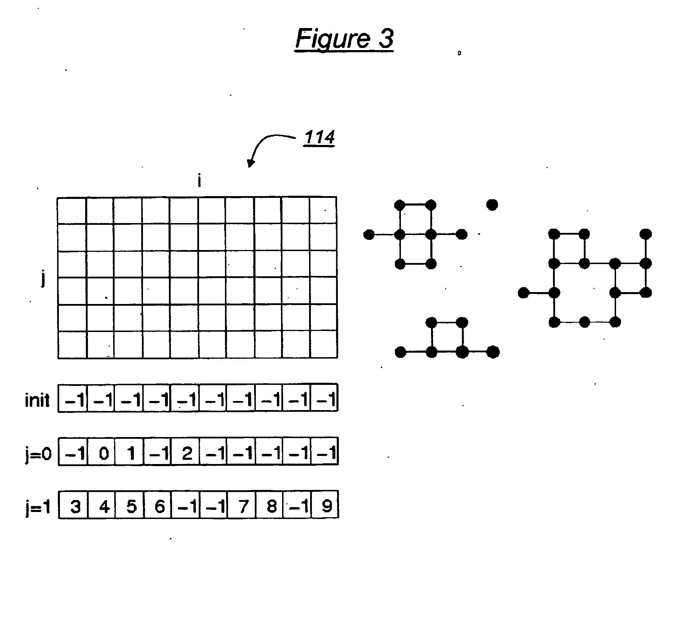

En référence aux figures 2 et 3, au cours d'une étape 216, l'ordinateur 100 initialise à la valeur -1 tous les éléments d'une liste de taille $N$ ($N$ étant le côté de l'image), notée $L$ , et met un compteur, noté $cpt$, à la valeur 0.

L'ordinateur 100 parcourt alors des points de l'image, de préférence tous, en passant, ligne par ligne, d'un point au suivant. Pour chaque point parcouru, appelé point en cours, l'ordinateur 100 met en oeuvre les étapes 218 à 230 suivantes.

Au cours d'une étape 218, l'ordinateur 100 détermine si la condition (C) est vérifiée pour le point en cours.

Pour cela, au cours d'une étape 220, l'ordinateur 100 parcourt tous les points fenêtrés du point en cours pour comparer leur capacité traversante à chacun des seuils de capacité.

Si la condition (C) est vérifiée, au cours d'une étape 222, l'ordinateur 100 enregistre la valeur -1 dans l'élément $L[i]$, $i$ étant le numéro de colonne du point en cours.

Si la condition (C) n'est pas vérifiée, l'ordinateur 100 met en oeuvre les étapes suivantes.

Au cours d'une étape 224, l'ordinateur 100 identifie le point en cours comme point critique.

Au cours d'une étape 226, l'ordinateur 100 identifie le point en cours et son point voisin situé directement au-dessus comme deux points critiques voisins si l'élément $L[i]$ présente une valeur supérieure ou égal à zéro. L'ordinateur 100 crée alors, toujours au cours de cette étape, un arc entre ces deux points critiques voisins, puis détermine et associe une capacité inter-points à cet arc.

Au cours d'une étape 228, l'ordinateur 100 identifie le point en cours et son point voisin situé directement à gauche comme deux points critiques voisins si l'élément $L[i-1]$ présente une valeur supérieure ou égal à zéro. L'ordinateur 100 crée alors, toujours au cours de cette étape, un arc entre ces deux points critiques voisins, puis détermine et associe une capacité inter-points à cet arc.

Au cours d'une étape 230, l'ordinateur 100 enregistre la valeur du compteur $cpt$ dans l'élément $L[i]$ de la liste, puis incrémente le compteur $cpt$ de 1.

Ainsi, à l'issue des étapes 210 et 212, l'ordinateur 100 a déterminé tous les points critiques de l'image, ainsi que les paires de points critiques voisins.

Au cours d'une étape 232, l'ordinateur 100 détermine une solution au problème de flot maximum dans un graphe comportant, d'une part, comme sommets, une source, un puits et les points critiques déterminés et, d'autre part, des arcs munis chacun d'une capacité de passage de flot positive ou nulle. Ces arcs comprennent des arcs, appelés arcs sources, reliant la source à chacun des points critiques, des arcs, appelés arcs puits, reliant le puits à chacun des points, et des arcs, appelés arcs inter-points, reliant les points critiques voisins entre eux. Dans ce graphe, les capacités traversantes représentent la combinaison des capacités de passage de flot de l'arc source et de l'arc puits le reliant respectivement à la source et au puits. Plus précisément, la capacité traversante d'un point $p \in P$ est égale à la différence des capacités de passage de flot de l'arc source et de l'arc puits reliant ce point :

$$c(p) = c_{source}(p) - c_{puit}(p)$$

Comme cela a été montré dans l'article de V. Kolmogorov et R. Zabih « What energy functions can be menimized via graph cuts ? » publié dans ECCV02 : Proceedings of the European Conférence on Computer Vision, pages 65-81, 2002, ces deux façons de voir les flots traversant sont équivalentes. Ainsi, au sens de la présente invention, les termes de « capacité traversante » signifient aussi bien la valeur $c(p)$, que l'ensemble des deux valeurs $c_{source}(p)$ et $c_{puit}(p)$.

La résolution de ce problème est obtenue par exemple par l'utilisation des méthodes connues, comme celle décrite dans le document cité plus haut.

Au cours d'une étape 234, l'ordinateur 100 assigne, en fonction de la solution déterminée, un label « objet » ou bien un label « arrière plan » à chacun d'au moins une partie des points de l'image, de préférence tous les points de l'image.

Au cours d'une étape 236, l'ordinateur 100 enregistre dans la mémoire d'ordinateur 112 du disque dur 110, au moyen du dispositif d'écriture 108, l'image 114 avec les labels assignés.

Dans le procédé de la figure 2, l'étape 218 nécessite de parcourir tous les points fenêtrés, ce qui entraîne un coût en calcul important, proportionnel à la taille de la fenêtre. Or, il peut être intéressant d'utiliser une grande fenêtre, car il a été trouvé que cela permettait de réduire de manière significative, en valeur absolue, les seuils de capacité, et donc de diminuer encore le nombre de points critiques.

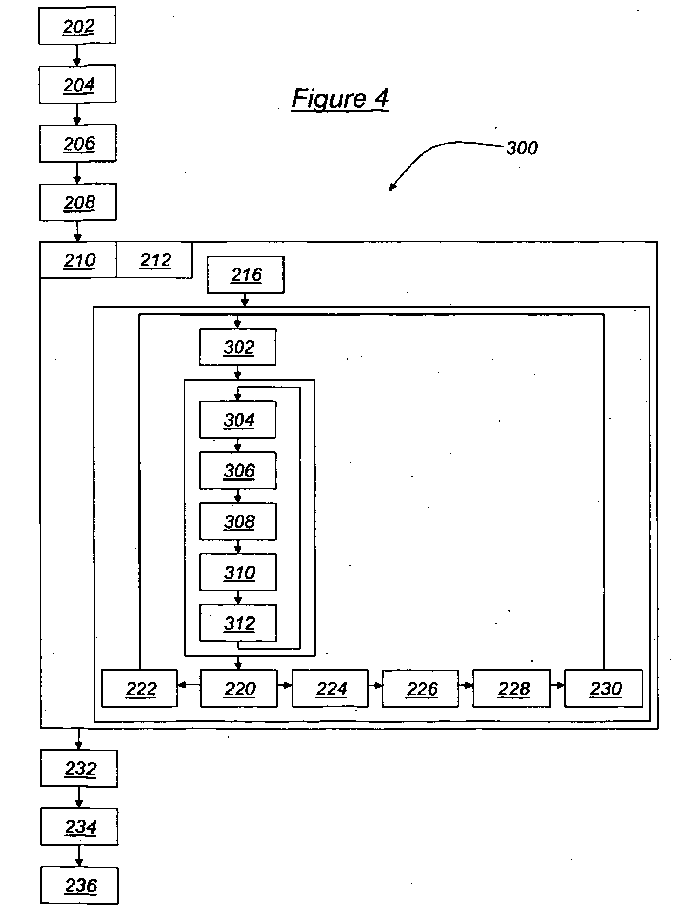

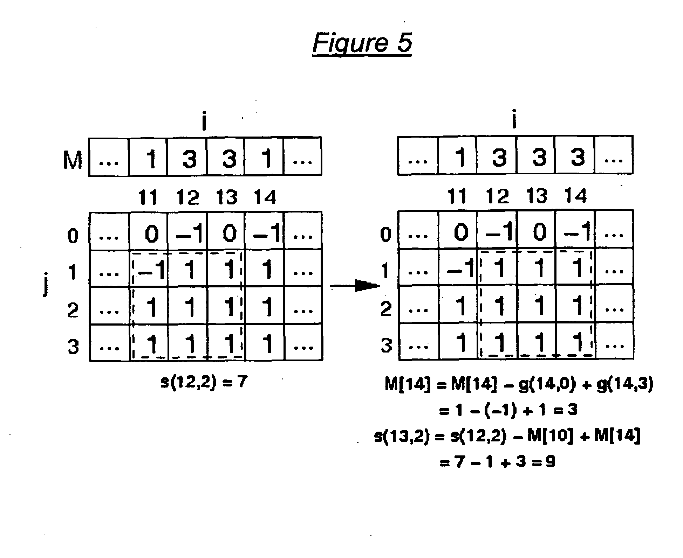

En référence aux figures 4 et 5, le procédé 300 remédie à ce problème.

Le procédé 300 est identique au procédé 200 de la figure 2, si ce n'est que l'étape 218 est remplacée par les étapes 302 à 312 suivantes, et que, dans l'exemple décrit, la fenêtre est de côté impair.

Au cours d'une étape 302, l'ordinateur 100 détermine si la condition (C) est vérifiée pour le point en cours en utilisant la détermination réalisée pour au moins un point parcouru avant le point en cours. Cela permet en effet de profiter des comparaisons avec les seuils positif et négatif qui ont été préalablement réalisées.

De préférence, c'est l'avant dernier point qui est utilisé, c'est-à-dire celui parcouru juste avant le point en cours. En effet, en tout cas à distance des bords de l'image, lorsque l'on passe d'un point au suivant sur une ligne, seul un point fenêtré n'a pas encore été testé vis-à-vis des seuils de capacité.

Ainsi, au cours d'une étape 304, l'ordinateur 100 détermine au moins un point fenêtré, appelé point fenêtré restant, dont la capacité traversante n'a pas encore été comparée aux seuils de capacité.

Au cours d'une étape 306, l'ordinateur 100 compare la capacité traversante de chaque point fenêtré restant avec les seuils de capacité.

Au cours d'une étape 308, l'ordinateur 100 assigne à chaque point fenêtré restant une première valeur de test lorsque sa capacité traversante est supérieure au seuil positif prédéterminé, une seconde valeur de test lorsque sa capacité traversante est inférieure au seuil négatif prédéterminé, ou bien une troisième valeur de test dans les autres cas, cette troisième valeur étant comprise entre les première et seconde valeurs de test et différente de ces dernières.

Par exemple, les première, seconde et troisième valeurs de test valent, respectivement, 1, -1 et 0. Dans ce cas, la valeur de test d'un point fenêtré restant $p \in P$, notée $g_\delta(p)$, est donnée par :

$$g_\delta(p) = \begin{cases} 1 & \text{si} \quad c(p) \geq \delta \\ -1 & \text{si} \quad c(p) \leq -\delta \\ 0 & \text{sinon} \end{cases}$$

Au cours d'une étape 310, l'ordinateur 100 détermine la somme des valeurs de test des points fenêtrés du point en cours, appelée somme en cours et notée $s(i,j)$, avec $i$ et $j$ respectivement le numéro de colonne et de ligne du point en cours. La somme en cours est déterminée à partir de la somme des valeurs de test des points fenêtrés du point précédemment parcouru sur la ligne, notée $s(i\text{-}1, j)$, de la valeur de test du point fenêtré restant, et des points fenêtrés de l'avant dernier point n'apparaissant plus parmi les points fenêtrés du point en cours. La somme en cours est par exemple calculée par ($(k\text{-}1)/2$ étant noté $\overline{k/2}$) :

$$s(i, j) = s(i - 1, j) - M[i - \overline{k/2} - 1] + M[i + \overline{k/2}]$$

avec

$$M[i + \overline{k/2}] = M[i + \overline{k/2}] - g_\delta(i + \overline{k/2}, j - \overline{k/2} - 1) + g_\delta(i + \overline{k/2}, j + \overline{k/2})$$

Au cours d'une étape 312, l'ordinateur 100 détermine si la condition (C) est vérifiée pour le point en cours, et donc si le point en cours est un point critique, à partir de la somme en cours $s(i, j)$. Dans l'exemple décrit, le point en cours est identifié comme un point critique si $|s(i,j)| \neq k^2$.

Les étapes 304 à 312 sont répétées pour chaque point parcouru, en étant adaptées dans le cas des points près des bords de l'image.

Le procédé de la figure 4 permet donc de s'affranchir de la taille de la fenêtre, de sorte que le coût devient presque constant en fonction de la taille de la fenêtre.

Il apparaît clairement que l'invention permet de réduire le nombre de points du graphe sur lequel le problème de flot maximum est résolu, et, de ce fait, le coût en calcul et en mémoire d'ordinateur du procédé de segmentation.

On notera par ailleurs que l'invention n'est pas limitée aux modes de réalisation décrits précédemment. Il apparaîtra en effet à l'homme de l'art que diverses modifications peuvent être apportées au mode de réalisation décrit ci-dessus, à la lumière de l'enseignement qui vient de lui être divulgué.

Tout d'abord, la dimension de l'image n'est pas limitée à deux. L'image pourrait être par exemple de dimension trois (volume) ou de dimension quatre (représentant généralement un volume au cours du temps), voire même plus. Les procédés présentés précédemment sont facilement adaptables à ces cas.

En outre, le critère de voisinage pourrait être choisi différemment. Par exemple comme étant le critère de voisinage dit de type 1, dans lequel les voisins d'un point sont définis par :

$$N(p) = \left\{ q \in P : |q_i - p_i| \leq 1, \forall 1 \leq i \leq d \right\}, \forall p \in P.$$

Là encore, les procédés présentés précédemment sont facilement adaptables. On remarquera que, avec un tel voisinage, le procédé de la figure 2 nécessite une liste de taille $N + 1$, au lieu de $N$, de sorte que le coût en mémoire d'ordinateur est identique.

En outre, il est possible de prévoir une fenêtre dont la taille varie suivant le point de l'image auquel elle est appliquée.

En outre, la présente invention couvre également le cas où les seuils de capacité varieraient en fonction de la position du point dans la fenêtre. Par exemple, il pourrait être avantageux de prévoir des seuils de capacité de valeurs absolues plus élevées à la périphérie de la fenêtre, puisque ce sont les points fenêtrés de la périphérie de la fenêtre qui ont le plus de probabilité de contribuer le plus à la saturation des arcs inter-points de la périphérie de la fenêtre. Cependant, dans ce cas, il y aurait a priori moins de points déterminés comme points critiques, et la résolution du problème de flot maximum risquerait de se faire sur un graphe plus grand.

Par ailleurs, dans d'autres modes de réalisation, l'image peut être lue et enregistrée à partir d'autres types de mémoire d'ordinateur qu'une mémoire de disque dur.

Par exemple, l'image peut être lue à partir de la mémoire vive de l'ordinateur, ou bien à partir d'une mémoire d'un dispositif informatique externe à l'ordinateur, tel qu'une machine d'imagerie médicale (IRM, scanner, etc.), via un réseau de communication de données.

Par exemple, l'image avec ses labels peut être enregistrée dans la mémoire vive de l'ordinateur au moyen des dispositifs d'écriture correspondant. Ainsi, l'image peut être rapidement lue afin par exemple de réaliser d'autres traitements, par exemple pour déterminer le volume de l'objet segmenté.

Dans les revendications qui suivent, les termes utilisés ne doivent pas être interprétés comme limitant les revendications au mode de réalisation exposé dans la présente description, mais doivent être interprétés pour y inclure tous les équivalents que les revendications visent à couvrir du fait de leur formulation et dont la prévision est à la portée de l'homme de l'art en appliquant ses connaissances générales à la mise en oeuvre de l'enseignement qui vient de lui être divulgué.

**Revendications**

1.  Procédé de segmentation d'image comportant :

    - lire (202) une image (114) enregistrée dans une mémoire d'ordinateur (112), l'image comportant une pluralité de points, ayant chacun une position dans l'image,
    - déterminer (232) une solution au problème de flot maximum dans un graphe comportant, d'une part, comme sommets, une source, un puits et des points de l'image et, d'autre part, des arcs munis chacun d'une capacité de passage de flot positive ou nulle,
    les arcs comprenant des arcs; appelés arcs sources, reliant la source à chacun des points, des arcs, appelés arcs puits, reliant le puits à chacun des points et des arcs, appelés arcs inter-points, reliant les points entre eux, à chaque point étant assignée une capacité, appelée capacité traversante, représentant la combinaison des capacités de passage de flot de l'arc source et de l'arc puits le reliant respectivement à la source et au puits,
    - assigner (234), en fonction de la solution déterminée, un label « objet » ou bien un label « arrière plan » à chacun d'au moins une partie des points de l'image,
    - enregistrer l'image avec les labels assignés dans une mémoire d'ordinateur (112),
    **caractérisé en ce qu'il comporte,** avant de déterminer une solution au problème de flot maximum :
    - déterminer (212) des points de l'image, appelés points critiques, pour chacun desquels, les points de l'image situés dans une fenêtre prédéterminée appliquée autour du point critique vérifient une condition prédéterminée sur leurs capacités traversantes,
    **et en ce que** les points du graphe comprennent les points critiques déterminés et les arcs inter-points relient les point critiques voisins entre eux selon un critère de voisinage prédéterminé sur leurs positions relatives dans l'image.

2.  Procédé de segmentation d'image selon la revendication 1, dans lequel tous les points de l'image vérifiant la condition prédéterminée sont déterminés.

3.  Procédé de segmentation d'image selon la revendication 1 ou 2, dans lequel la fenêtre est centrée sur le point sur lequel elle est appliquée.

4.  Procédé de segmentation d'image selon l'une quelconque des revendications 1 à 3, dans lequel :

    chaque point a une intensité,
    la capacité traversante de chacun d'au moins une partie des points est déterminée à partir de l'intensité de ce point, et
    la capacité de passage de flot de chacun d'au moins une partie des arcs inter-points est déterminée à partir de l'intensité des deux points qu'il relie.

5.  Procédé de segmentation d'image selon l'une quelconque des revendications 1 à 4, dans lequel la condition prédéterminée est que, parmi au moins un nombre prédéterminé de points de l'image situés dans une fenêtre prédéterminée appliquée autour du point critique :

    - au moins deux points présentent des capacités traversantes de signes contraires,
    - au moins un point présente une capacité traversante positive inférieure à un seuil positif prédéterminé, ou bien
    - au moins un point présente une capacité traversante négative supérieure à un seuil négatif prédéterminé.

6.  Procédé de segmentation d'image selon la revendication 5, dans lequel les seuils sont constants dans la fenêtre.

7.  Procédé de segmentation d'image selon la revendication 5 ou 6, comportant en outre, pour déterminer les points critiques :

    - parcourir des points de l'image,
    - pour chaque point parcouru, appelé point en cours :

- déterminer (218) si au moins un nombre prédéterminé de points fenêtrés du point en cours :

  - ont leurs capacités traversantes chacune supérieure au seuil de capacité positif prédéterminé, ou bien
  - ont leurs capacités traversantes chacune inférieure au seuil de capacité négatif prédéterminé,

  en parcourant (220) tous les points fenêtrés pour comparer leur capacité traversante au seuil négatif et au seuil positif.

8. Procédé de segmentation d'image selon la revendication 5 ou 6, comportant en outre, pour déterminer les points critiques :

  - parcourir des points de l'image,
  - pour chaque point parcouru, appelé point en cours :

    - déterminer (302) si tous les points fenêtrés du point en cours :

      - ont leurs capacités traversantes chacune supérieure au seuil de capacité positif prédéterminé, ou bien
      - ont leurs capacités traversantes chacune inférieure au seuil de capacité négatif prédéterminé,

  en utilisant la détermination réalisée pour un point parcouru avant le point en cours.

9. Programme d'ordinateur téléchargeable depuis un réseau de communication et/ou enregistré sur un support lisible par ordinateur, **caractérisé en ce qu'**il comprend des instructions de programme d'ordinateur pour la mise en oeuvre d'un procédé de segmentation d'image selon l'une quelconque des revendications 1 à 8 lorsque ledit programme d'ordinateur est exécuté par un ordinateur.

10. Système informatique comportant:

  - un dispositif (106) de lecture d'une mémoire d'ordinateur,
  - un dispositif (108) d'écriture dans une mémoire d'ordinateur,
  **caractérisé en ce qu'**il comporte :
  - une mémoire d'ordinateur (112) sur laquelle est enregistré un programme d'ordinateur (116) comprenant des instructions de programme d'ordinateur pour, lorsque le programme d'ordinateur est exécuté par le système informatique :

    - lire, au moyen du dispositif de lecture (106), une image (114) enregistrée dans une mémoire d'ordinateur, l'image (114) comportant une pluralité de points, comprenant chacun une position dans l'image,
    - assigner à chaque point une capacité, appelée capacité traversante,
    - déterminer des points de l'image, appelés points critiques, pour chacun desquels, les points de l'image situés dans une fenêtre prédéterminée appliquée autour du point critique vérifient une condition prédéterminée sur leurs capacités traversantes,
    - déterminer une solution au problème de flot maximum dans un graphe comportant, d'une part, comme sommets, une source, un puits et les points critiques déterminés et, d'autre part, des arcs munis chacun d'une capacité de passage de flot positive ou nulle,

  les arcs comprenant des arcs, appelés arcs sources, reliant la source à chacun des points, des arcs, appelés arcs puits, reliant le puits à chacun des points et des arcs, appelés arcs inter-points, reliant les points critiques voisins entre eux selon un critère de voisinage prédéterminé sur leurs positions relatives dans l'image,
  la capacité traversante de chaque point représentant la combinaison des capacités de passage de flot de l'arc source et de l'arc puits le reliant respectivement à la source et au puits,
  - assigner, en fonction de la solution déterminée, un label « objet » ou bien un label « arrière plan » à chacun d'au moins une partie des points de l'image,
  - enregistrer, au moyen du dispositif d'écriture (108), l'image (114) avec les labels assignés dans une mémoire d'ordinateur (112).

**Patentansprüche**

1. Verfahren zur Segmentierung eines Bildes, umfassend:

   - Lesen (202) eines Bildes (114), das in einem Computerspeicher (112) aufgezeichnet ist, wobei das Bild eine Vielzahl von Punkten umfasst, die jeweils eine Position im Bild einnehmen,
   - Bestimmung (232) einer Lösung des Problems des maximalen Stroms in einem Diagramm, umfassend einerseits, als Scheitel, einen Ursprung, eine Senke und Punkte des Bildes, und andererseits Bögen, die jeweils mit einer positiven oder Nullkapazität zum Durchfluss des Stroms ausgestattet sind,
   wobei die Bögen Bögen umfassen, die als Ursprungsbögen bezeichnet werden, und den Ausgangspunkt mit jedem der Punkte verbinden, Bögen, die als Senkenbögen bezeichnet werden, und die Senke mit jedem der Punkte verbinden, und Bögen, die als Zwischenpunktbögen bezeichnet werden, die die Punkte untereinander verbinden,
   wobei jedem Punkt eine Kapazität zugewiesen wird, die als Durchflusskapazität bezeichnet wird, die die Kombination der Kapazitäten zum Durchfluss des Stroms des Ursprungsbogens und des Senkenbogens darstellt, wodurch er jeweils mit dem Ursprung und mit der Senke verbunden wird,
   - Zuweisung (234), je nach der festgesetzten Lösung, eines Etiketts "Objekt" oder auch eines Etiketts "Hintergrund" an jeden von mindestens einem Teil der Bildpunkte,
   - Aufzeichnung des Bildes mit den zugewiesenen Etiketten in mindestens einem Computerspeicher (112),
   **dadurch gekennzeichnet, dass** es, vor der Festsetzung einer Lösung für das Problem des maximalen Stroms, Folgendes umfasst:
   - Bestimmung (212) der Punkte des Bildes, die als kritische Punkte bezeichnet werden, wobei für jeden dieser die Punkte des Bildes, die in einem vorbestimmten Fenster angeordnet sind, das um den kritischen Punkt angebracht ist, eine vorbestimmte Bedingung ihrer Durchflusskapazität überprüfen,
   und dadurch, dass die Punkte des Diagramms die bestimmten kritischen Punkte umfassen und die Zwischenpunktbögen die benachbarten kritischen Punkte gemäß einem vorbestimmten Nachbarschaftskriterium auf ihren relativen Positionen im Bild verbinden.

2. Verfahren zur Segmentierung eines Bildes nach Anspruch 1, wobei alle Punkte des Bildes, die der vorbestimmten Bedingung genügen, bestimmt werden.

3. Verfahren zur Segmentierung eines Bildes nach Anspruch 1 oder 2, wobei das Fenster auf dem Punkt zentriert ist, auf dem es angebracht ist.

4. Verfahren zur Segmentierung eines Bildes nach einem der Ansprüche 1 bis 3, wobei
   jeder Punkt eine Intensität aufweist,
   die Durchflusskapazität jedes von mindestens einem Teil der Punkte ausgehend von der Intensität dieses Punkts festgelegt ist, und
   die Kapazität zum Durchfluss des Stroms jedes von mindestens einem Teils der Zwischenpunktbögen ausgehend von der Intensität der zwei Punkte, die er verbindet, festgelegt ist.

5. Verfahren zur Segmentierung eines Bildes nach einem der Ansprüche 1 bis 4, wobei die vorbestimmte Bedingung ist, dass unter mindestens einer vorbestimmten Anzahl von Punkten des Bildes, die sich in einem vorbestimmten Fenster befinden, das um den kritischen Punkt angebracht ist:

   - mindestens zwei Punkte Durchflusskapazitäten von entgegengesetzten Zeichen darstellen,
   - mindestens ein Punkt eine positive Durchflusskapazität darstellt, die geringer als eine vorbestimmte positive Schwelle ist, oder
   - mindestens ein Punkt eine negative Durchflusskapazität aufweist, die höher als eine vorbestimmte negative Schwelle ist.

6. Verfahren zur Segmentierung eines Bildes nach Anspruch 5, wobei die Schwellen im Fenster konstant sind.

7. Verfahren zur Segmentierung eines Bildes nach Anspruch 5 oder 6, umfassend außerdem, um die kritischen Punkte zu bestimmen:

   - Durchlaufen der Punkte des Bildes,
   - für jeden durchlaufenen Punkt, genannt gegenwärtiger Punkt:

- Bestimmung (218), ob mindestens eine vorbestimmte Anzahl von befensterten Punkten des gegenwärtigen Punkts:

- jeweils eine Durchflusskapazität aufweisen, die höher als die vorbestimmte positive Kapazitätsschwelle ist, oder

- jeweils eine Durchflusskapazität aufweisen, die niedriger als die vorbestimmte negative Kapazitätsschwelle ist,

indem sie alle befensterten Punkte (220) durchlaufen, um ihre Durchlaufkapazität mit der negativen Schwelle und mit der positiven Schwelle zu vergleichen.

8. Verfahren zur Segmentierung eines Bildes nach Anspruch 5 oder 6, umfassend außerdem, um die kritischen Punkte zu bestimmen:

- Durchlaufen der Punkte des Bildes,
- für jeden durchlaufenen Punkt, genannt gegenwärtiger Punkt:
- Bestimmung (302), ob alle befensterten Punkte des gegenwärtigen Punkts:

- jeweils eine Durchflusskapazität aufweisen, die höher als die vorbestimmte positive Kapazitätsschwelle ist, oder

- jeweils eine Durchflusskapazität aufweisen, die niedriger als die vorbestimmte negative Kapazitätsschwelle ist,

unter Verwendung der Bestimmung, die für einen durchlaufenen Punkt vor dem gegenwärtigen Punkt durchgeführt wurde.

9. Computerprogramm, das von einem Kommunikationsnetz heruntergeladen werden kann und/oder auf einem computerlesbaren Träger aufgezeichnet ist, **dadurch gekennzeichnet, dass** es Computerprogrammanweisungen umfasst, für die Durchführung eines Verfahrens zur Segmentierung eines Bildes nach einem der Ansprüche 1 bis 8, wenn das Computerprogramm auf einem Computer ausgeführt wird.

10. Computersystem, umfassend:

- eine Vorrichtung (106) zum Lesen eines Computerspeichers,
- eine Vorrichtung (108) zum Schreiben in einen Computerspeicher,
**dadurch gekennzeichnet, dass** sie Folgendes umfasst:
- einen Computerspeicher (112), auf dem ein Computerprogramm (116) aufgezeichnet ist, umfassend Computerprogrammanweisungen, um, wenn das Computerprogramm vom Computersystem ausgeführt wird:

- mit Hilfe der Lesevorrichtung (106) ein Bild (114) zu lesen, das in einem Computerspeicher aufgezeichnet ist, wobei das Bild (114) eine Vielzahl von Punkten umfasst, die jeweils eine Position im Bild einnehmen,

- jedem Punkt eine Kapazität, die Durchflusskapazität genannt wird, zuzuweisen,
- Punkte des Bildes zu bestimmen, die als kritische Punkte bezeichnet werden, wobei für jeden dieser die Punkte des Bildes, die in einem vorbestimmten Fenster angeordnet sind, das um den kritischen Punkt angebracht ist, eine vorbestimmte Bedingung ihrer Durchflusskapazität überprüfen,
- eine Lösung des Problems des maximalen Stroms in einem Diagramm zu bestimmen, umfassend einerseits, als Scheitel, einen Ursprung, eine Senke und die bestimmten kritischen Punkte, und andererseits Bögen, die jeweils mit einer positiven oder Nullkapazität zum Durchfluss des Stroms ausgestattet sind, wobei die Bögen Bögen umfassen, die als Ursprungsbögen bezeichnet werden und den Ursprung mit jedem der Punkte verbinden, Bögen, die Senkenbögen genannt werden, die die Senken mit jedem der Punkte vergleichen, und Bögen, die als Zwischenpunktbögen bezeichnet werden, die die benachbarten kritischen Punkte gemäß einem vorbestimmten Nachbarschaftskriterium auf ihren relativen Punkten im Bild miteinander verbinden, wobei die Durchflusskapazität jeder Punkt die Kombination der Kapazitäten zum Durchfluss des Stroms des Ausgangsbogens und des Senkenbogens darstellt, wobei er jeweils der Ursprung und mit der Senke verbunden wird
- je nach der festgesetzten Lösung, ein Etikett "Objekt" oder auch ein Etikett "Hintergrund" auf jeden von mindestens einem Teil der Punkte des Bildes zuzuweisen,

- mit Hilfe der Schreibvorrichtung (108) das Bild (114) mit den zugewiesenen Etiketten in einem Computerspeicher (112) aufzuzeichnen.

**Claims**

1. Image segmenting method, comprising:

   - reading (202) an image (114) recorded in a computer memory (112), wherein the image comprises a plurality of points, each having a position in the image,
   - determining (232) a solution to the problem of maximum flow in a graph comprising, on the one hand, as vertices, a source, a sink and image points, and, on the other hand, arcs each having a positive or zero flow passage capacity,
   wherein the arcs include arcs called source arcs, linking the source to each of the points, arcs called sink arcs, linking the sink to each of the points, and arcs called inter-point arcs, linking the points to one another,
   wherein each point is assigned a capacity, called a through-capacity, representing the combination of the flow passage capacities of the source arc and the sink arc linking it respectively to the source and to the sink,
   - assigning (234), on the basis of the determined solution, an "object" label or a "background" label to each of at least some of the points of the image,
   - recording the image with the assigned labels in a computer memory, **characterized in that** it comprises, before determining a solution to the problem of maximum flow:
   - determining (212) points of the image, called critical points, for each of which the image points located in a predetermined window applied around the critical point verify a predetermined condition on their through-capacities,
   and **in that** the points of the graph include the determined critical points and the inter-point arcs linking the neighboring critical points to one another according to a predetermined neighboring criterion on their relative positions in the image.

2. Image segmenting method according to claim 1, wherein all of the points of the image verifying the predetermined condition are determined.

3. Image segmenting method according to claim 1 or 2, wherein the window is centered on the point to which it is applied.

4. Image segmenting method according to any one of claims 1 to 3, wherein:

   each point has an intensity,
   the through-capacity of each of at least some of the points is determined on the basis of the intensity of this point, and
   the flow passage capacity of each of at least some of the inter-point arcs is determined on the basis of the intensity of the two points that it links.

5. Image segmenting method according to any one of claims 1 to 4, wherein the predetermined condition is that, among at least a predetermined number of points of the image located in a predetermined window applied around the critical point:

   - at least two points have through-capacities of opposite signs,
   - at least one point has a positive through-capacity that is less than a predetermined positive threshold, or
   - at least one point has a negative through-capacity that is greater than a predetermined negative threshold.

6. Image segmenting method according to claim 5, in which the thresholds are constant in the window.

7. Image segmenting method according to claim 5 or 6, also comprising, in order to determine the critical points:

   - examining the points of the image,
   - for each point examined, called a point in progress:

      - determining (218) whether the through-capacities for at least a predetermined number of windowed points of the point in progress:

- are each greater than the predetermined positive capacity threshold, or
- are each less than the predetermined negative capacity threshold,

by examining (220) all of the windowed points in order to compare their through-capacity with the negative threshold and the positive threshold.

8. Image segmenting method according to claim 5 or 6, also comprising, in order to determine the critical points:

- examining the points of the image,
- for each point examined, called a point in progress:

- determining (302) whether the through-capacities for all of the windowed points of the point in progress:

- are each greater than the predetermined positive capacity threshold, or
- are each less than the predetermined negative capacity threshold, by using the determination obtained for a point examined before the point in progress.

9. Computer program capable of being downloaded from a communication network and/or recorded on a medium capable of being read by a computer, **characterized in that** it includes computer program instructions for implementing an image segmenting method according to any one of claims 1 to 8 when said computer program is run by a computer.

10. Computer system comprising:

- a device (106) for reading a computer memory,
- a device (108) for writing in a computer memory,
**characterized in that** it comprises:
- a computer memory (112) in which a computer program (116) is recorded, including computer program instructions for, when the computer program is run by the computer system:

- reading, by means of the reading device (106), an image (114) recorded in a computer memory, in which the image (114) comprises a plurality of points, each including a position in the image,
- assigning a capacity to each point, called a through-capacity,
- determining points of the image, called critical points, for each of which, the points of the image located in a predetermined window applied around the critical point verify a predetermined condition on their through-capacities,
- determining a solution to the problem of maximum flow in a graph comprising, on the one hand, as vertices, a source, a sink and determined image points, and, on the other hand, arcs each having a positive or zero flow passage capacity,
wherein the arcs include arcs called source arcs, linking the source to each of the points, arcs called sink arcs, linking the sink to each of the points, and arcs called inter-point arcs, linking the neighboring critical points to one another according to a predetermined neighboring criterion on their relative positions in the image,
wherein the through-capacity of each point represents the combination of the flow passage capacities of the source ark and the sink arc respectively linking it to the source and to the sink,
- assigning, on the basis of the determined solution, an "object" label or a "background" label to each of at least some of the points of the image,
- recording, by means of the writing device (108), the image (114) with the assigned labels in a computer memory (112).

## _Figure 1_

Figure 2

## Figure 3

_114_

init | −1 | −1 | −1 | −1 | −1 | −1 | −1 | −1 | −1 | −1 |

j=0 | −1 | 0 | 1 | −1 | 2 | −1 | −1 | −1 | −1 | −1 |

j=1 | 3 | 4 | 5 | 6 | −1 | −1 | 7 | 8 | −1 | 9 |

Figure 4

## *Figure 5*

$$s(12,2) = 7$$

$$M[14] = M[14] - g(14,0) + g(14,3)$$
$$= 1 - (-1) + 1 = 3$$
$$s(13,2) = s(12,2) - M[10] + M[14]$$
$$= 7 - 1 + 3 = 9$$

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2007014473 A

**Littérature non-brevet citée dans la description**

- **Y. BOYKOV ; M-P. JOLLY.** Interactive graph cuts for optimal boundary and région segmentation of objects in n-d images. *ICCV01 : Proceedings of « Internation Conference on Computer Vision,* 2001, 105-112
- **Y. BOYKOV ; V. KOLMOGOROV.** An experimental comparison of min-cut/max flow algorithms for energy minimization in vision. *EMMCVPR01 Proceedings of the International Workshop on Energy Minimization Methods in Computer Vision and Pattern Recognition,* 2001, 359-374

- Space-Time Multi-Resolution Banded Graph-Cut for Fast Segmentation. **TOBI VAUDREY et al.** Pattern Recognition. Springer Berlin Heidelberg, 10 Juin 2008, 203-213
- Localized Hierarchical Graph Cuts. **RASTOGI A et al.** Computer Vision, Graphics & Image Processing. IEEE, 16 Décembre 2008, 163-170
- **V. KOLMOGOROV ; R. ZABIH.** What energy functions can be menimized via graph cuts ?. *ECCV02 : Proceedings of the European Conférence on Computer Vision,* 2002, 65-81